# EUROPEAN PATENT APPLICATION

(11) **EP 4 814 314 A1**
(43) Date of publication of application: **30.09.2026**
(21) Application number: 25305457.1
(22) Date of filing: 28.03.2025
(51) Int. Cl.: F04D 29/60, H02K 9/06, H02K 9/04, F04D 17/16

(54) **FAN ASSEMBLY FOR AN ELECTRIC MOTOR AND ELECTRIC MOTOR COMPRISING SUCH A FAN ASSEMBLY**

(71) Applicant: ALSTOM Holdings, 93400 Saint-Ouen-sur-Seine (FR)
(72) Inventor: BOUALEM, Benali, 25660 SAONE (FR); TRAHARD, Quentin, 25660 SAONE (FR); TRIMAILLE, Gaetan, 25440 CHENECEY-BUILLON (FR); ROBBE, Gilles, 25660 MONTFAUCON (FR)
(74) Representative: Plasseraud IP

(57) **Abstract**

A fan assembly (10) for an electric motor (15) comprises a) a fan (80) comprising a fan housing (105) enclosing a plurality of fan blades (115) and a fan motor (110) ; b) a mounting support (85) extending along a transverse direction (Y) intended to be orthogonal to a main axis (X1) of a shaft (30) of the electric motor (15), the mounting support (85) comprising a support-fan interface (145) to be attached to an inner base (105B) of the fan housing (105), and a closure part (70) configured to be slidably received in a complementary cutout (65) formed in a flange (50, 55) of the motor; c) first fixation means (90A, 90B) for attaching the support-fan interface (145) to the inner base (105B) of the fan housing (105); and d) second removable fixation means (95A, 95B, 95C) for attaching the mounting support (85) to the flange (50, 55).

## Description

The present invention concerns a fan assembly for an electric motor and an electric motor comprising such a fan.

In the field of electric motors, in particular for rail vehicles, overheating is to be avoided to ensure proper operation of the motor and a long life cycle.

Cooling devices circulating an external fluid in the motor, for example air surrounding the motor, in order to cool the rotor and/or a stator of the motor are known.

In particular, some electric motors are equipped with an electric fan for creating a pushed or pulled airflow in the air-gap and/or in air ducts surrounding through the rotor and/or the stator.

EP21160990 discloses an electric motor comprising a main stator, a main rotor, a main motor shaft and an integrated fan comprising blades movable in rotation around an axis coaxial with the main motor shaft. The blades are driven by an auxiliary motor associated with the fan. The auxiliary motor comprises an auxiliary stator, an auxiliary rotor having an auxiliary motor shaft arranged in the extension of the main motor shaft.

If a breakdown occurs on the integrated fan, the main motor must be completely disassembled from its location, in particular in the vehicle, before replacement or repair of the integrated fan.

Hence, the maintenance time and costs are too high.

One aim of the invention is to provide a fan assembly for ventilating the electric motor, the assembly allowing easy assembly and disassembly of the fan.

To this end, the invention relates to a fan assembly for an electric motor having a flange, the fan assembly comprising:
a) a fan for ventilating the electric motor, the fan comprising a fan housing enclosing a plurality of fan blades and a fan motor configured for driving the fan blades in rotation around a fan axis,
b) a mounting support extending along a transverse direction intended to be orthogonal to a main axis of a shaft of the electric motor, the mounting support comprising:
   - a support-fan interface, intended to be attached to an inner base of the fan housing, and
   - a closure part, protruding from the support-fan interface along the transverse direction and configured to be slidably received in a complementary cutout formed in the flange;
c) first fixation means configured for attaching the support-fan interface to the inner base of the fan housing; and
d) second removable fixation means configured for attaching the mounting support to the flange.

The mounting support allows easy assembly/disassembly of the fan with the flange, by sliding the closure part in the complementary cutout along the longitudinal direction. Since the longitudinal direction is orthogonal to the main shaft of the motor equipped with the flange, this direction can be positioned in an easy-to-access direction, for example in the environment of a bogie of a train equipped with the motor, contrary to the direction of the motor shaft.

The closure part forms with the flange in which the complementary cutout is defined a complete flange, allowing proper airflow.

The second fixation means allow immobilizing the mounting support, and consequently the fan housing, relative to the flange, while allowing the fan to be removed from the flange for replacement.

According to other advantageous aspects of the invention, the flange assembly comprises one or more of the following features, taken in isolation or in any technically possible combination:
- the closure part comprises two guiding members, each configured to be slidably received in a respective receiving groove of the complementary cutout;
- the first fixation means are removable;
- the second fixation means comprise at least one screw intended to be received both in a transverse through hole formed in the closure part and in a respective transverse tapped hole formed in the flange, said transverse holes extending parallel to the transverse direction and being intended to be aligned;
- the mounting support further comprises a protrusion extending opposite the closure part relative to the support-fan interface along the transverse direction, an opposite tapped hole being provided in the protrusion along the transverse direction and being intended to be placed in alignment with a respective opposite through hole extending in the flange opposite the complementary cutout along the transverse direction (Y),
   the second fixation means comprising at least one screw intended to be received in both opposite holes;
- the second fixation means comprise at least one screw intended to be received both in a longitudinal hole formed in the closure part and in a respective longitudinal through hole formed in the flange, said longitudinal holes extending parallel to the longitudinal direction and being intended to be aligned.

The invention further relates to an electric motor comprising a shaft extending along a main axis, a flange, and a fan assembly, the flange extending in a transverse plane orthogonal to the main axis, the flange having a cutout, the fan assembly being according to any of the preceding claims.

According to other advantageous aspects of the invention, the electric motor comprises one or more of the following features, taken in isolation or in any technically possible combination:
- the fan axis is intended to be arranged as an extension of the main axis;
- the complementary cutout comprises two grooves extending parallel to the transverse direction and forming a slide for the closure part;
- a surface area of a cross-section of at least one of the grooves orthogonal to the transverse direction is smaller close to the main axis than far from it.

Figure 1 is a half sectional view of an embodiment of a self-ventilated open traction motor equipped with a fan assembly according to the invention.
Figure 2 is a sectional view of a fan assembly according to the invention attached to a fan in a plane orthogonal to the fan shaft.
Figure 3 is a view of a flange configured for being assembled with a fan assembly according to the invention.
Figure 4 is a perspective view of the flange of figure 3 and of a fan assembly according to the invention attached to a fan at the beginning of their assembly.
Figure 5 is a perspective view of the flange and of the fan assembly of figure 4 once assembled.
Figure 6 is a sectional view of the assembly of figure 5 in a first plane BB (figure 6A) orthogonal to the transverse direction and in a second plane B1B1 (figure 6B) orthogonal to the transverse direction, the planes BB and B1B1 being shown on figure 4.

The invention relates to a fan assembly 10 for an electric motor 15.

The electric motor 15 is for example configured for equipping a land, air or water vehicle engine (not represented), in particular a railway vehicle such as a train, a subway or a tramway.

The electric motor 15 is for example a traction motor.

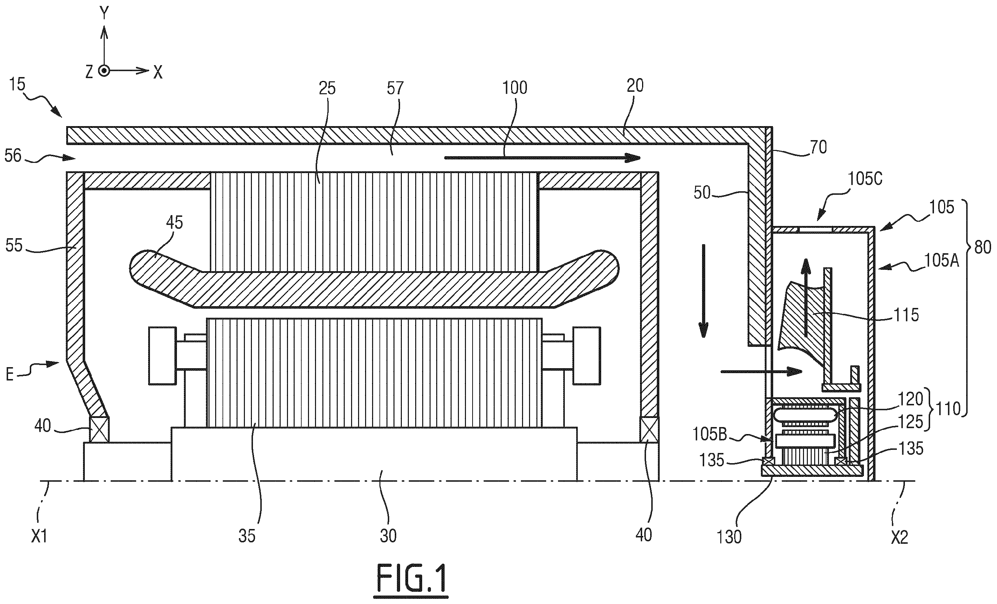

Figure 1 represents an exemplary embodiment of an electric motor 15 equipped with an embodiment of a fan assembly 10 according to the invention.

The motor 15 comprises a main housing 20, a main stator 25 attached to the main housing 20, a main motor shaft 30, and a main rotor 35 fixed to the main motor shaft 30.

The main motor shaft 30 extends mainly in a longitudinal direction X and is movable relative to the main housing 20 in rotation around a main axis X1 parallel to the longitudinal direction X.

The main motor shaft 30 is guided in rotation around by means of bearings 40 mounted on the main stator 25.

The main rotor 35 surrounds the main motor shaft 30.

The main stator 25 surrounds the main rotor 35 and carries a set of coils 45.

The main housing 20 delimits an inner volume, the main rotor 35 and the main stator 25 being arranged within said inner volume.

The main housing 20 extends along the longitudinal direction X between an air outlet flange 50 and an air inlet flange 55.

Each of the air outlet flange 50 and the air inlet flange 55 extends in a respective transverse plane YZ orthogonal to the longitudinal direction X.

The air inlet flange 55 comprises at least on inlet through hole 56.

The air outlet flange 50 comprises at least one outlet through hole 60.

The motor 15 comprises at least one cooling channel 57 extending along the longitudinal direction X and forming a fluidic connection between at least one inlet through hole 56 and at least one outlet through hole 60.

The at least one cooling channel 57 is, for example, arranged radially between the main stator 25 and the main housing 20.

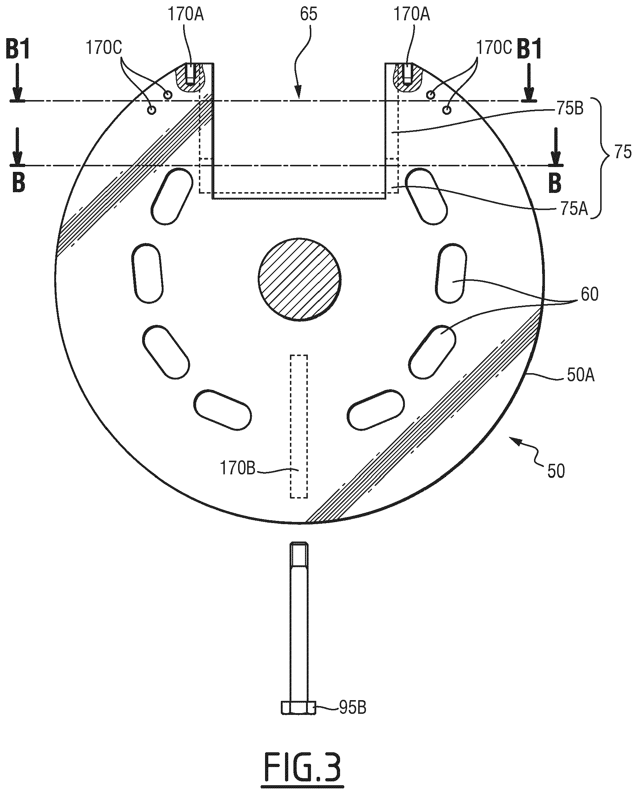

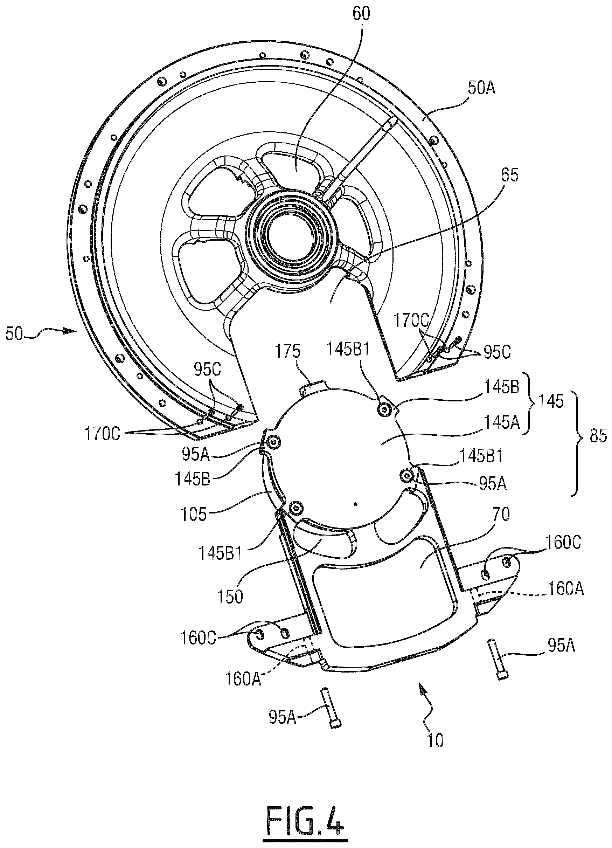

Exemplary embodiments of an air outlet flange 50 are represented in figures 3 and 4.

In these examples, the air outlet flange 50 comprises a plurality of outlet through holes 60 distributed around the main axis X1 in the respective transverse plane YZ.

Preferably, the outlet through holes 60 are evenly distributed.

The air outlet flange 50 further comprises a cutout 65.

The cutout 65 is configured for receiving a closure part 70 of the fan assembly 10, as will be described hereafter.

The cutout 65 extends along a transverse direction Y orthogonal to the longitudinal direction X.

The cutout 65 is configured for receiving the closure part 70 in a sliding manner along the transverse direction Y.

The cutout 65 can comprise two parallel grooves 75 extending parallel to the transverse direction Y.

The grooves 75 are spaced apart from each other along a third direction Z orthogonal to the longitudinal direction X and the transverse direction Y and they border the cutout 65.

In this case, the two grooves 75 form a slide, thus allowing the cutout 65 to receive the closure part 70 in a sliding manner along the transverse direction Y.

In an embodiment, a cross-section of any one of or of both grooves 75 evolves along the transverse direction.

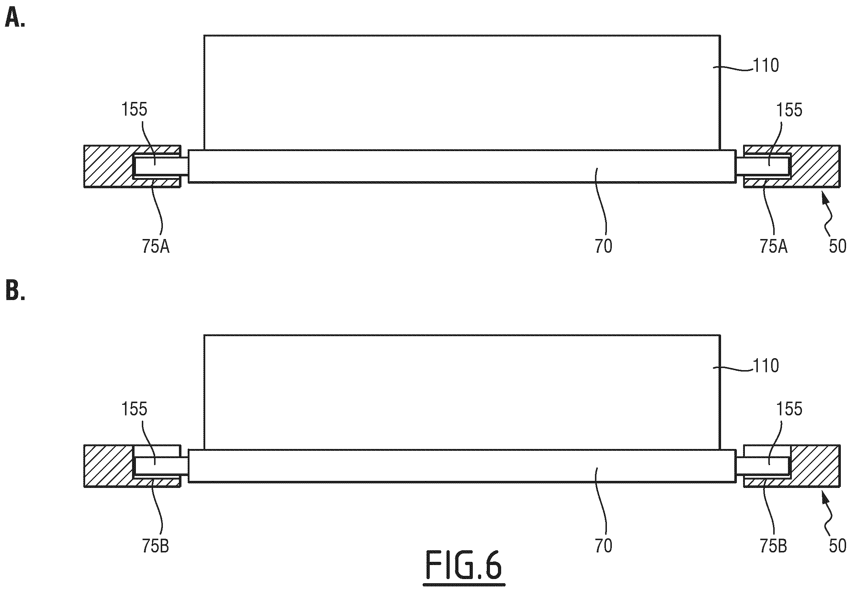

In particular embodiment, a surface area of the cross-section of a lower part 75A of any of the grooves 75 is smaller than the cross-section of an upper part 75B of this groove 75, the lower part 75A being closer to the main axis X1 and the upper part 75B being closer to a periphery 50A of the air inlet flange 50 along the transverse direction Y, as shown in figure 3 and figure 6.

In a particular embodiment, the cross-section of the lower part 75A is U-shaped, as shown in figure 6A.

In a particular embodiment, the cross-section of the upper part 75B is L-shaped, as shown in figure 6B.

Thank to these provisions, the closure part 70 can be inserted in a loose manner in the upper part 75B. The insertion of the closure part 70 is thus easy. Once the closure part 70 positioned in the cutout 65, the closure part 70 can be tightly maintained and precisely positioned along the longitudinal direction X thank to the lower part 75A.

The fan assembly 10 comprises a fan 80 for ventilating the electric motor 15, a mounting support 85 comprising the closure part 70, first fixation means 90 configured for attaching the mounting support 85 to the fan 80, and second removable fixation means 95A, 95B configured for attaching the mounting support 85 to the air outlet flange 50.

The fan 80 is configured to circulate an air flow 100 through the at least one cooling channel 57, from the at least one inlet through hole 56 towards the least one outlet through hole 60.

The fan 80 comprises a fan housing 105 enclosing a fan motor 110 and a plurality of fan blades 115.

The fan housing 105 extends along the longitudinal direction X between an outer base 105A and an inner base 105B.

Each of the outer base 105A and the inner base 105B extend in a respective transverse plane YZ.

The outer base 105A is provided with at least one outlet through hole 105C.

The fan housing 105 is provided with at least one inlet through hole allowing air to flow from the at least one cooling channel 57 to the at least one outlet through hole 105C.

The fan motor 110 is configured for driving the fan blades 115 in rotation around a fan axis X2.

According to a particular embodiment shown in figure 1, the fan motor 110 comprises an auxiliary stator 120 attached to the fan housing 105, an auxiliary rotor 125 attached to an auxiliary shaft 130.

The auxiliary shaft 130 may be integral with the fan blades 115.

The auxiliary rotor 125 is guided in rotation around the fan axis X2 by means of auxiliary bearings 135.

In a particular embodiment, the auxiliary shaft 130 is coaxial with the main motor shaft 30, as shown in figure 1.

Preferably, the fan blades 115 are evenly distributed around the fan axis X2.

The mounting support 85 is configured for allowing easy mounting and unmounting of the fan 80 on/from the air outlet flange 50.

The mounting support 85 extends along the transverse direction Y orthogonal to the main axis X1.

The mounting support 85 comprises a support-fan interface 145 and the closure part 70.

The support-fan interface 145 is intended to be attached to the inner base 105B of the fan housing 105 by means of the first fixation means 90.

To this end, the support fan interface 145 can comprise a central portion 145A intended to be positioned in contact with at least part of the inner base 105B.

The central portion 145A may have a shape similar to a shape of the inner base 105B in the transverse plane YZ, as shown in figure 4.

The support-fan interface 145 can comprise one or more tabs 145B protruding radially from the central portion 145A, as shown in figure 4. Each tab 145B can be provided with a through hole 145B1 intended to be aligned with a tapped hole of a respective tab of the fan housing 105, said tapped holes being configured for receiving a respective screw 90A after their insertion in the respective through holes 145B1.

In this case, the first fixation means 90 comprise the one or more screws 90A.

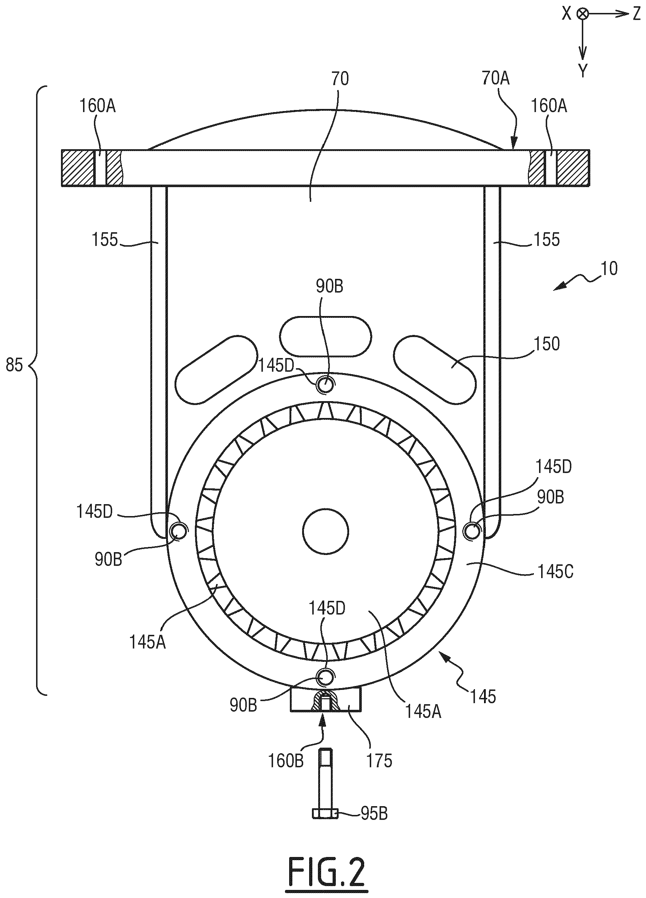

Alternatively, as shown in figure 2, the support-fan interface 145 can comprise a peripheral portion 145C extending around the central portion 145A in the transverse plane YZ. The peripheral portion 145C can be provided with one or more tapped hole 145D intended to be aligned with a respective through hole machined in a peripheral part of the fan housing 105, said tapped hole and through hole being configured for receiving a respective screw 90B comprised in the first fixation means 90.

Still alternatively, the support-fan interface 145 can be permanently attached to the fan housing 105.

The closure part 70 protrudes from the support-fan interface 145 along the transverse direction Y in the transverse plane YZ.

The closure part 70 is configured to be slidably received in the cutout 65 formed in the air outlet flange 50.

To this end, the closure part 70 has a shape substantially complementary to a shape of the cutout 65.

In other word, the closure part 70 is configured to approximately replace the parts of the outlet flange 50 that would have or have been removed from a conventional outlet flange to form the air outlet flange 50 having the cutout 65.

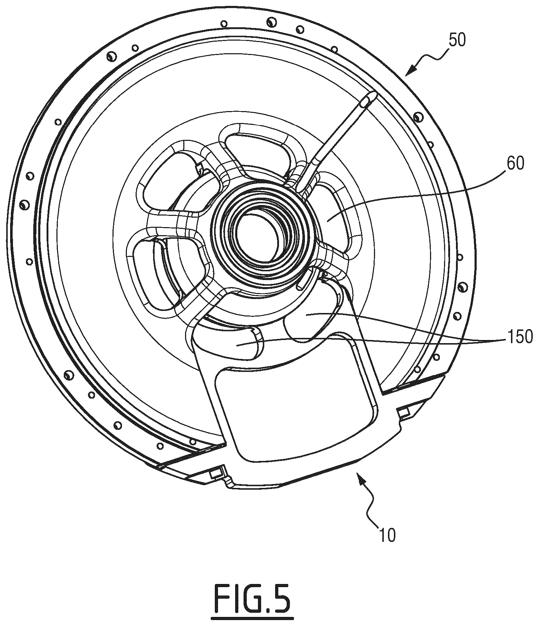

This can be observed in figure 5.

In an embodiment, the closure part 70 comprises one or more replacing through holes 150.

The replacing through holes 150 can be similar to the through holes 60.

The replacing through holes 150 can be configured to partially or entirely replace the through holes that would have been formed in a conventional outlet flange without a cutout 65.

In the examples of figure 4 and 5, the replacing through holes 150 are smaller than the through holes 60, due to the extension of the fan housing 105 and of the central part 145A.

When the closure part 70 is received in the cutout 65, the closure part 70 closes the flange 50 apart from the through holes 60.

In a particular embodiment, the closure part 70 can comprise two guiding members 155 extending along the transverse direction Y on both sides of the closure part 70, as shown in figures 2 and 6.

Each guiding member 155 is configured to be received in a respective groove 75.

In particular, a guiding member 155 can be configured to have a shape complementary to a shape of a respective lower part 75A, in particular a U-shaped lower part 75A, of the respective groove 75.

The closure part 70 comprises one or more fixation holes 160A, 160B, 160C configured for receiving second removable fixation means.

Each transverse fixation hole 160A extends in the closure part 70 along the transverse direction Y and is intended to be aligned with a respective blind tapped transverse hole 170A of the air outlet flange 50, which can be observed in figure 3.

In this case, the second fixation means comprise one or more screws 95A, each configured to be received in a respective transverse hole 170A through a respective fixation hole 160A, such that a head of the screw 95A relies on an external wall 70A of the closure part 70.

Each opposite fixation hole 160B extends along the transverse direction Y in a protrusion 175 of the mounting-support 85. The protrusion 175 extends opposite the closure part 70 relative to support-fan interface 145.

For example, the protrusion 175 extends from the central part 145A, as shown in figure 2 and figure 4.

The opposite fixation hole 160B is a tapped hole intended to be aligned with a respective opposite through hole 170B of the air outlet flange 50 extending in the air outlet flange 50 opposite the cutout 65 in the transverse direction Y, as shown in figure 3.

In this case, the second fixation means comprise a screw 95B configured to be received in the opposite fixation hole 160B through the respective opposite through hole 170B, such that a head of the screw 95B relies on the air outlet flange 50 at its periphery 50A.

Each longitudinal fixation hole 160C extends along the longitudinal direction X.

Each longitudinal fixation hole 160C is intended to be aligned with a respective longitudinal through hole 170C of the air outlet flange 50 extending along the longitudinal direction X in the air outlet flange 50 close to its periphery 50 and close to a groove 75, as shown in figure 3 and figure 4.

At least one of a given fixation hole 160C and of the respective longitudinal through hole 170C is tapped.

In this case, the second fixation means comprise a screw 95C configured to be received both in the longitudinal fixation hole 160C and the respective longitudinal through hole 170C.

The fan assembly 10 described above is intended to equip the air outlet flange 50. In another embodiment, the fan assembly 10 is intended to equip the air inlet flange 55 *mutatis mutandis.*

## Claims

1. Fan assembly (10) for an electric motor (15) having a flange (50, 55), the fan assembly (10) comprising:
a) a fan (80) for ventilating the electric motor (15), the fan (80) comprising a fan housing (105) enclosing a plurality of fan blades (115) and a fan motor (110) configured for driving the fan blades (115) in rotation around a fan axis (X2),
b) a mounting support (85) extending along a transverse direction (Y) intended to be orthogonal to a main axis (X1) of a shaft (30) of the electric motor (15), the mounting support (85) comprising:
- a support-fan interface (145), intended to be attached to an inner base (105B) of the fan housing (105), and
- a closure part (70), protruding from the support-fan interface(145) along the transverse direction (Y) and configured to be slidably received in a complementary cutout (65) formed in the flange (50, 55);
c) first fixation means (90A, 90B) configured for attaching the support-fan interface (145) to the inner base (105B) of the fan housing (105); and
d) second removable fixation means (95A, 95B, 95C) configured for attaching the mounting support (85) to the flange (50, 55).

2. Fan assembly (10) according to claim 1, wherein the closure part (70) comprises two guiding members (155), each configured to be slidably received in a respective receiving groove (75) of the complementary cutout (65).

3. Fan assembly (10) according to any of the preceding claims, wherein the first fixation means (90A, 90B) are removable.

4. Fan assembly (10) according to any of the preceding claims, wherein the second fixation means (95A, 95B, 95C) comprise at least one screw (95A) intended to be received both in a transverse through hole (160A) formed in the closure part (70) and in a respective transverse tapped hole (170A) formed in the flange (50, 55), said transverse holes (160A, 170A) extending parallel to the transverse direction (Y) and being intended to be aligned.

5. Fan assembly (10) according to any of the preceding claims, wherein:
- the mounting support (85) further comprises a protrusion (175) extending opposite the closure part (70) relative to the support-fan interface (145) along the transverse direction (Y), an opposite tapped hole (160B) being provided in the protrusion (175) along the transverse direction (Y) and being intended to be placed in alignment with a respective opposite through hole (170B) extending in the flange (50) opposite the complementary cutout (65) along the transverse direction (Y), the second fixation means (95A, 95B, 95C) comprising at least one screw (95B) intended to be received in both opposite holes (160B, 170B).

6. Fan assembly (10) according to any of the preceding claims, wherein the second fixation means (95A, 95B, 95C) comprise at least one screw (95C) intended to be received both in a longitudinal hole (160C) formed in the closure part (70) and in a respective longitudinal through hole (170C) formed in the flange (50, 55), said longitudinal holes (160C, 170C) extending parallel to the longitudinal direction (X) and being intended to be aligned.

7. Electric motor (15) comprising a shaft (30) extending along a main axis (X1), a flange (50, 55), and a fan assembly (10), the flange (50, 55) extending in a transverse plane (YZ) orthogonal to the main axis (X1), the flange (50, 55) having a cutout (65), the fan assembly (10) being according to any of the preceding claims.

8. Electric motor (15) according to any of the preceding claims, wherein the fan axis (X2) is intended to be arranged as an extension of the main axis (X1).

9. Electric motor (15) according to claim 6 or claim 7, wherein the complementary cutout (65) comprises two grooves (75) extending parallel to the transverse direction (Y) and forming a slide for the closure part (70).

10. Electric motor (15) according to claim 9, wherein a surface area of a cross-section of at least one of the grooves (75) orthogonal to the transverse direction (Y) is smaller close to the main axis (X1) than far from it.
